# EUROPÄISCHE PATENTSCHRIFT

(11) **EP 2 071 123 B1**
(45) Veröffentlichungstag und Bekanntmachung des Hinweises auf die Patenterteilung: **30.08.2017**
(21) Anmeldenummer: 08020359.9
(22) Anmeldetag: 22.11.2008
(51) Int. Cl.: F01C 21/02, F04C 18/344, F04C 29/02, F04C 28/06, F16C 33/10

(54) **Drehschiebervakuumpumpe mit modifizierter Wellenlagerung**
Turning head vacuum pump with modified shaft bearing
Pompe à vide à tiroir rotatif avec modification de palier de l'arbre

(30) Priorität: 13.12.2007 DE 102007060147
(43) Veröffentlichungstag der Anmeldung: 17.06.2009
(73) Patentinhaber: Pfeiffer Vacuum GmbH, 35614 Aßlar (DE)
(72) Erfinder: Sachs, Ronald, Dr., 44135 Dortmund (DE); Wenzel, Werner, 35641 Schöffengrund (DE); Wagner, Jürgen, 57629 Müschenbach (DE); Blumenthal, Hardwig, Dr.-Ing., 38678 Clausthal-Zellerfeld (DE); Laabid, Abdelhakim, Dipl.-Ing., 38678 Clausthal-Zellerfeld (DE); Hagemann, Thomas, Dipl.-Ing., 38678 Clausthal-Zellerfeld (DE); Schwarze, Hubert, Prof. Dr.-Ing., 35039 Marburg (DE)
(74) Vertreter: Manitz Finsterwald Patentanwälte PartmbB

(56) Entgegenhaltungen:
- DE-A1-102004 024 554
- DE-A1-102005 015 626
- US-A- 3 433 542
- US-A- 5 810 479
- US-A1- 2003 156 769

## Beschreibung

Die Erfindung betrifft eine Drehschiebervakuumpumpe nach dem Oberbegriff des ersten Anspruchs.

Drehschiebervakuumpumpen werden zur Erzeugung von Grob- und Feinvakuum in vielen Bereichen der Industrie eingesetzt. Mit steigenden Energiepreisen geht die Forderung nach einer Senkung der Betriebskosten einher. Aus der DE-A 10 2004 024 554 ist eine Drehschiebervakuumpumpe gemäß dem Oberbegriff des Anspruchs 1 bekannt. Die DE-A 10 2004 024 554 schlägt ferner vor, eine Drehschiebervakuumpumpe mit einem bürstenlosen Gleichstrommotor auszustatten. Diese ermöglicht aufgrund einer gleichmäßigen Abhängigkeit des Drehmoments von der Drehzahl eine kleinere Dimensionierung des Antriebs. Weitere Maßnahmen zur Senkung der Leistungsaufnahme, die sowohl für diese Drehschiebervakuumpumpe als auch solche mit üblichen Antrieben, beispielsweise Asynchronmotoren, sind erwünscht.

US 3433542A offenbart ein Wellenlager mit einer inneren Fläche, die mehrere halbkreisförmige Taschen mit jeweils einer Schmiernut umfasst.

DE 102005015626A1 beschreibt eine Walze mit einem feststehenden Träger, einem rotierbaren Walzenmantel sowie einer axialen Gleitlagerung, die einen an einer Stirnseite des Trägers angeordneten Stützring mit mehreren in axialer Richtung wirkenden Gleitlagerelementen umfasst.

Aus diesem Stand der Technik ergibt sich daher die Aufgabe, eine Drehschiebervakuumpumpe vorzustellen, die eine geringere Leistungsaufnahme aufweist und die Gestaltungsfreiheit insbesondere des Pumpsystems erhöht.

Diese Aufgabe wird gelöst durch eine Drehschiebervakuumpumpe mit den Merkmalen des ersten Anspruchs. Die Ansprüche 2 bis 8 geben vorteilhafte Weiterbildungen an.

Die hydrodynamischen Verhältnisse in einem Gleitlager hängen von der Geschwindigkeit der Gleitlagerflächen und damit der Drehzahl der Welle ab. Durch wenigstens eine Vertiefung mit einer Mantelfläche mit erhöhtem Abstand zur Wellenachse in der Zylinderfläche des Radialgleitlagers bildet sich ein Schmierfilm auch bei geringen Drehzahlen der Welle aus. Daher kann die Drehschiebervakuumpumpe nach dem ersten Anspruch bei geringen Drehzahlen, insbesondere einer gegenüber der Normaldrehzahl abgesenkten Leerlaufdrehzahl betrieben werden. Für die in der Drehschiebervakuumpumpe geleisteten Kompressionsarbeit muss Leistung durch den Antrieb zur Verfügung gestellt werden. Bei Betrieb mit Leerlaufdrehzahl sinkt daher die Leistungsaufnahme in solchen Zeiten, in denen das volle Saugvermögen nicht benötigt wird und daher weniger Kompressionsarbiet geleistet werden muss. Das volle Saugvermögen wird bei Normaldrehzahl erreicht.

In einer Weiterbildung weist die Zylinderfläche an ihren axialen Enden Abschnitte mit in axialer Richtung und Umfangsrichtung konstantem Abstand zur Wellenachse auf. Diese reduzieren erheblich die aus dem Radialgleitlager in die Pumpstufe hinein austretende Menge von Schmiermittel. Die Mengenreduzierung führt zur Verringerung der Geräuschbildung durch den so genannten Ölschlag, der Abgabe von im Schmiermittel gelösten Gasen und der Leistungsaufnahme.

Anordnen von drei Vertiefungen in gleichem Winkelabstand um die Welle herum führt zu verbesserten Führungseigenschaften, so dass Taumelbewegungen der Welle verringert werden. Dies verringert ebenfalls die Leistungsaufnahme aufgrund der höheren Laufruhe. Letztere bewirkt zudem eine Verringerung der Geräuschbildung.

In einer Weiterbildung ist die Vertiefung so angeordnet, dass sie in Richtung der von der Schmiermittelpumpe erzeugten Kraft auf der dieser gegenüberliegenden Seite der Welle liegt. Hierdurch wird der Auslenkung der Welle in diese Richtung entgegengewirkt, eine Taumelbewegung vermieden und dadurch die Laufruhe verbessert. Insgesamt verringert dies Leistungsaufnahme und Geräuschbildung.

Die Maßnahme, den Abstand der Mantelfläche zur Wellenachse in Umfangrichtung zunehmend zu gestalten, bewirkt einen kontinuierlichen Schmierfilm und stetigen Tragkraftverlauf in Umfangsrichtung. Dies verbesserten die hydrodynamischen Eigenschaften und damit die Leistungsaufnahme der Drehschiebervakuumpumpe.

Als Weiterbildung weist die Vertiefung eine Tasche auf, in der eine Schmiermittelmenge gespeichert ist, mit der eine zuverlässige Schmierfilmausbildung bei geringer Drehzahl bewirkt wird. Die Absenkung der Drehzahl zur Verringerung der Leistungsaufname wird daher verbessert.

In einer anderen Weiterbildung ist die Welle einstückig gestaltet und wird vom Antrieb direkt angetrieben. Kupplungen zwischen Wellenstücken entfallen, nur noch eine Welle muss gelagert werden, so dass die Lagerverluste sinken. Solchen Direktantrieben stehen hohe Anforderungen an die Genauigkeit des Antriebaufbaus entgegen, da sonst radiale Kräfte auf die Welle ausgeübt werden. Diese Anforderungen werden jedoch durch die verbesserten Führungseigenschaften der Lager überwunden.

In einer Weiterbildung weist die Drehschiebervakuumpumpe ein mit einer Axialvertiefung versehenes Axiallager auf, mit der selbst hohe Axialkräfte aufgefangen werden können. Dies wirkt sich vorteilhaft auf Laufruhe und Leistungsaufnahme aus.

Anhand eines Ausführungsbeispiels soll die Erfindung näher erläutert und weitere Vorteile aufgezeigt werden. Es zeigen:
- Fig. 1:: Schnitt durch eine Drehschiebervakuumpumpe.
- Fig. 2:: Schnitt durch das Radialgleitlager zwischen den Vakuumpumpstufen.
- Fig. 3:: Schnitt durch das Radialgleitlager senkrecht zur Wellenachse entlang I-I' .
- Fig. 4:: Schnitt durch das Radialgleitlager senkrecht zur Wellenachse entlang II-II'.
- Fig. 5:: Perspektivische Darstellung eines Ausschnitts des Radialgleitlagers.
- Fig. 6:: Sicht auf die Lagerfläche des Axiallagers.

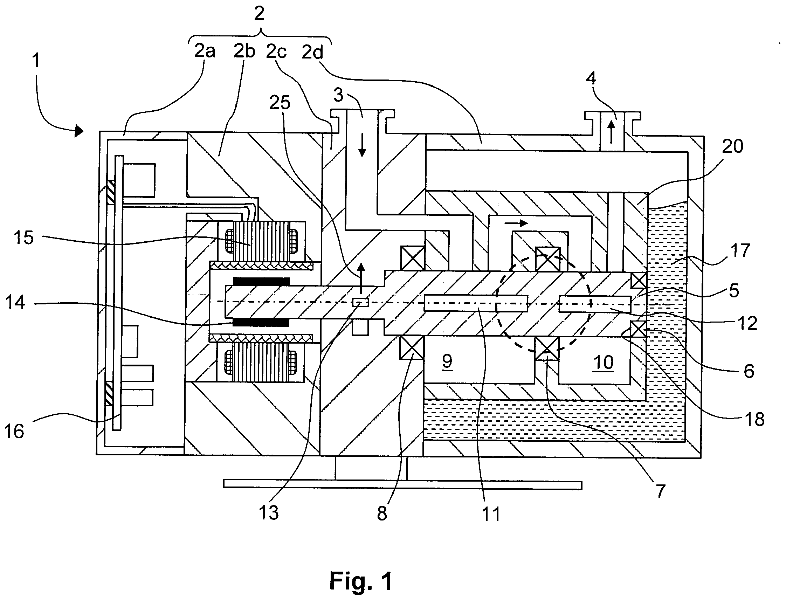

Die Figur 1 zeigt eine Drehschiebervakuumpumpe 1 mit einem Gehäuse 2, welches mehrere Abschnitte aufweist. In einem ersten Abschnitt 2a ist die Antriebselektronik 16 untergebracht. In einem zweiten Abschnitt 2b befindet sich der Antrieb, welcher die elektrischen Spulen 15 umfasst, deren Bestromung durch die Antriebselektronik 16 vorgenommen wird. Die elektrischen Spulen 15 wirken mit Permanentmagneten 14 zusammen, welche mit der Welle 5 verbunden sind. Der dritte Abschnitt 2c des Gehäuses beinhaltet den Gaseinlass 3. Der vierte Abschnitt des Gehäuses umfasst den Gasauslass 4 und nimmt in seinem Innenraum das Pumpsystemgehäuse 20 auf. Dieses ist wenigestens teilweise vom Schmiermittelvorrat 17 umgeben, so dass in ihm erzeugte Wärme über das Schmiermittel abgegeben werden kann. Im Pumpsystemgehäuse befinden sich die Pumpstufen. Nach dem bekannten Prinzip einer Drehschiebervakuumpumpe durchsetzt die Welle 5 exzentrisch die zylindrische Kammer der Feinvakuumstufe 9 und die zylindrische Kammer der Grobvakuumstufe 10. Die Welle weist für jede Pumpstufe einen Schlitz auf, in dem wenigstens ein Schieber aufgenommen wird, der aufgrund der Drehung der Welle in der jeweiligen Kammer umläuft und so die Kompression des Gases bewirkt. In der Feinvakuumstufe ist dies der Schieber der Feinvakuumstufe 11, in der Grobvakuumstufe der Schieber der Grobvakuumstufe 12.

Die Welle ist durch ein erstes Radiallager 7, welches zwischen den Pumpstufen angeordnet ist, und ein zweites Radiallager 8, welches zwischen Feinvakuumstufe und Antrieb im dritten Abschnitt des Gehäuses angeordnet ist, in radialer Richtung drehbar unterstützt. Ein axiales Gleitlager 6 unterstützt die Welle in Richtung der Wellenachse. Der Durchmesser der Welle nimmt an einer Stufe 18 vom Durchmesser im Bereich Pumpstufen zu einem Bereich am Wellenende ab. Die Stirnfläche im Bereich Stufe dient als Teil des axialen Gleitlagers. Die Welle weist eine Schmiermittelpumpe 13 auf, die zwischen Antrieb und zweitem Radiallager vorgesehen ist. Sie versorgt das axiale Gleitlager und das zweite Radiallager 8 mit unter Druck stehendem Schmiermittel. Dem ersten Radiallager 7 wird unter Atmosphärendruck stehendes Schmiermittel zugeführt. Die Schmiermittelpumpe erzeugt eine Kraft auf die Welle, deren Richtung durch den Pfeil 25 angezeigt ist.

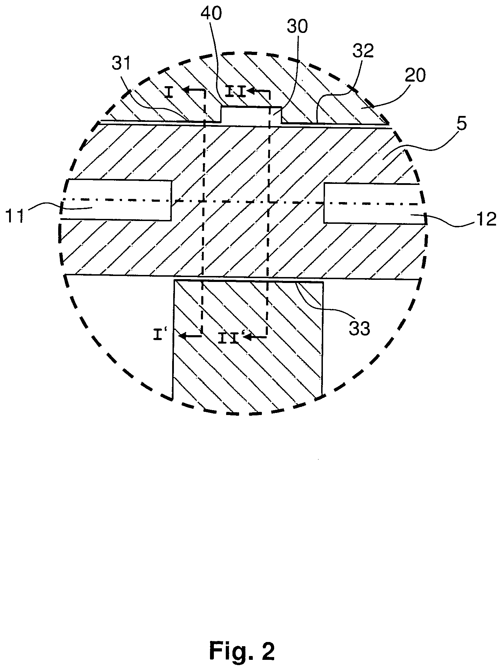

Figur 2 zeigt das zwischen den Pumpstufen angeordnete erste Radiallager im Detail. Vorteilhaft werden die im Folgenden an diesem Radiallager beschriebenen Gestaltungsmerkmale auch auf das zweite Radiallager angewendet.

Das Radiallager ist als Gleitlager ausgeführt und weist eine zur Wellenachse koaxiale Zylinderfläche 33 auf. Zwischen dieser Zylinderfläche und der Welle 5 befindet sich ein Spalt, in dem Schmiermittel einen Schmierfilm ausbildet, auf welchem die Wirkung des Lagers beruht. Die koaxiale Zylinderfläche ist vorteilhaft im Pumpsystemgehäuse 20 ausgebildet, kann jedoch auch an einem eigenständigen Bauteil vorgesehen sein, um hierdurch eine günstige Materialpaarung wählen zu können. Die koaxiale Zylinderfläche wirkt mit dem Teil der Oberfläche der Welle zusammen, der sich zwischen dem Schieber der Feinvakuumstufe 11 und dem Schieber der Grobvakuumstufe 12 befindet. Zwischen den an den axialen Enden der Zylinderfläche vorgesehenen Abschnitten 31 und 32 , die einen in axialer Richtung und Umfangsrichtung kontanten Abstand zur Wellenachse aufweisen, ist eine erfindungsgemäße Vertiefung 30 angeordnet, welche zudem eine Tasche 40 aufweist.

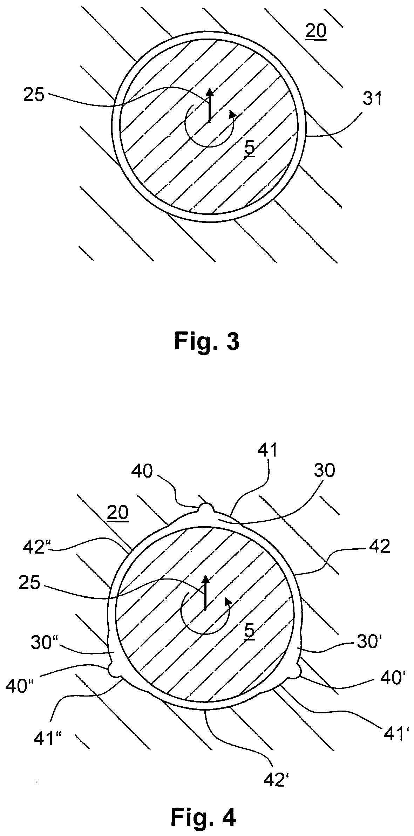

Zur besseren Veranschaulichung des Aufbaus zeigen die Figuren 3 und 4 Schnitte durch das Radiallager. Der Schnitt in Figur 3 erfolgt entlang der Linie I-I' auf Höhe des Abschnitts 31. Die im Pumpsystemgehäuse 20 vorgesehen Fläche des Abschnitts 31 ist koaxial zur Welle 5 gestaltet, wobei in Umfangsrichtung ein Spalt zwischen Fläche und Welle verbleibt. Das Spaltmaß ist zunächst entlang des Umfangs gleichmäßig, jedoch bewirken Kräfte auf die Welle eine Auslenkung aus der Mitte. Eine solche Kraft entsteht durch die Schmiermittelpumpe, für deren Kraft die Wirkrichtung durch den Pfeil 25 angegeben ist. Der Druck auf den im Spalt befindlichen Schmiermittelfilm ist an der Stelle der Auslenkung erhöht, wodurch eine Rückstellung der Welle bewirkt wird.

Der Schnitt in Figur 4 erfolgt entlang der in Figur 1 gezeigten Linie II-II' und auf Höhe der Vertiefung 30. Drei Vertiefungen 30, 30' und 30" sind in gleichem Winkelabstand über den Umfang verteilt. Jede dieser Vertiefungen weist zudem eine Tasche 40, 40' und 40" auf. Zwischen den Vertiefungen sind Mittelabschnitte 42, 42' und 42" vorgesehen, welche jeweils einen konstanten Abstand zur Wellenachse aufweisen, der im einfachsten Fall dem Abstand der Abschnitte 31 und 32 zur Wellenachse entspricht. Jede der Vertiefungen 30, 30' und 30" weist eine Mantelfläche 41, 41' und 41" auf, die einen in Umfangsrichtung zunehmenden Abstand zu Wellenachse aufweist. Dieser Abstand nimmt in Richtung Tasche zu, der Übergang zum Mittelabschnitt 42 ist stetig. Durch diese Gestaltung entsteht an jeder Vertiefung wenigstens ein konvergierender Spalt, insgesamt im Beispiel drei in Drehrichtung konvergierende Spalte. In den Mittelabschnitten 42, 42', 42" ist der Abstand zur Welle am geringsten, dadurch die Steifigkeit des Lagers am höchsten. Die Anordnung der Vertiefung 41 in entgegengesetzter Richtung zur Kraft 25 bewirkt, dass diese Kraft im wesentlichen durch die zwei Mittelabschnitte 42 und 42" aufgenommen wird. Hierdurch wird die Welle sehr gut zentriert. Die Taschen 40, 40' und 40" beinhalten einen Schmiermittelvorrat. Der Schmiermittelvorrat steht unmittelbar nach Einschalten der Drehschiebervakuumpumpe, wenn die Welle aus dem ruhenden Zustand in Drehung versetzt wird, zur Schmierung zu Verfügung. Dies bringt Vorteile in Bezug auf Laufverhalten während dieses Startvorgangs und auf die Lebensdauer, da Lagerverschleiß verringert wird.

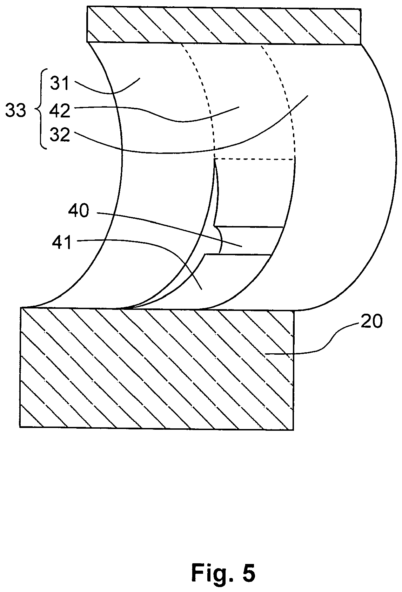

Figur 5 zeigt eine der Vertiefungen perspektivisch. Die koaxiale Zylinderfläche 33 ist aus mehreren Stücken aufgebaut. Diese umfassen den Mittelabschnitt 42 und die Abschnitte 31 und 32 am axialen Ende. Diese Flächen weisen alle denselben Abstand zur Wellenachse auf. Die Vertiefung besitzt eine Mantelfläche 41, die in den Mittelabschnitt 42 stetig übergeht. Die Mantelfläche weist zudem eine Tasche 40 auf, in welcher sich ein Schmiermittelvorrat aufbaut, durch den auch bei einer geringen Drehzahl der Welle eine sichere Funktion des Gleitlagers gewährleistet ist. Der Schmiermittelvorrat steht unmittelbar nach Einschalten der Drehschiebervakuumpumpe, wenn die Welle aus dem ruhenden Zustand in Drehung versetzt wird, zur Schmierung zu Verfügung. Dies bringt Vorteile in Bezug auf Laufverhalten während dieses Startvorgangs und auf die Lebensdauer, da Lagerverschleiß verringert wird.

Die Anordnung von Vertiefungen 30, 30' und 30" im Wechsel mit Mittelabschnitten 42, 42' und 42" führt zu einer besseren Zentrierung der Welle 5 da eine Mehrzahl von Engstellen des Spaltes zwischen Welle und lagerbildendem Teil des Pumpsystemgehäuses entlang des Lagerumfangs verteilt sind. Bei einem einfachen zylindrischen Lager hingegen gibt es nur ein Engstelle dort, wohin die Welle aus ihrer zentrischen Lage ausgelenkt wird. Die Taschen in den Vertiefungen stellen Schmiermittelspeicher da, aus denen auch dann Schmiermittel für das Gleitlager zur Verfügung gestellt wird, wenn nur wenig Schmiermittel in das Lager gefördert wird. Dies ist in dem vorgestellten Beispiel dann der Fall, wenn sich die Welle nur langsam dreht, denn bei langsamer Drehung fallen Förderleistung und Druck der auf der Welle angeordneten Schmiermittelpumpe ab. Die Abschnitte 31 und 32 sorgen dafür, dass Schmiermittel im Gleitlager gehalten wird und nicht aus diesem, insbesondere aus dem zwischen den Pumpstufen angeordneten ersten Radiallager, in die zylindrischen Kammern 10 und 11 von Fein- und Grobvakuumstufe gelangt. Dort ist ein Schmiermittelüberschuss zu vermeiden, da Schmiermittel gelösten Gas mit sich führt, dass in den Kammern ausgasen würde. Zudem würde dieses Schmiermittel dem Gleitlager fehlen. Es stellt sich heraus, dass alle diese Maßnahmen zur Verringerung der Leistungsaufnahme beitragen.

In allen Figuren 3 bis 5 sind Taschen und Vertiefungen überdeutlich gezeichnet. Als vorteilhaft günstig hat es sich erwiesen, den maximalen Abstand der Vertiefung zur Wellenachse wenige hunderstel Millimeter größer als den Abstand des Mittelabschnitts zur Wellenachse zu gestalten. Die Tasche weist einen um etwa einen zehntel Millimeter größer Abstand zur Wellenachse als die Vertiefung auf.

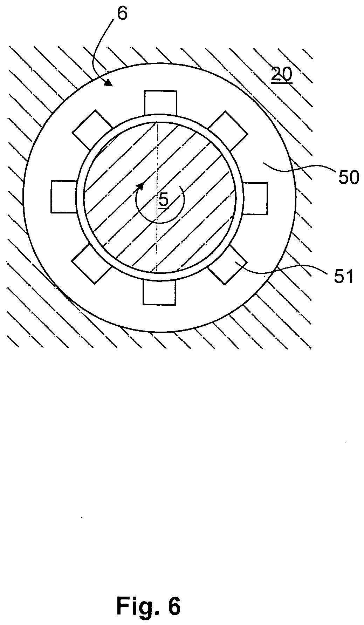

Die Gestaltung der Axiallagers 6 zeigt Figur 6. Im Pumpstufengehäuse 20 ist eine Lagerfläche 50 vorgesehen, deren Flächennormale weitgehend parallel zur Wellenachse liegt. Zwischen dieser Fläche und der Stufe der Welle bildet sich ein tragender Schmiermittelfilm aus. Auf der Fläche sind entlang des Umfangs in regelmäßigen Abständen Axialvertiefungen 51 angeordnet. Dieser Vertiefungen erstrecken sich nur über einen Teil der radialen Tiefe der Lagerfläche. Hierdurch wird der Schmiermittelbedarf verringert und der zu starke Austritt von Schmiermittel aus dem Axiallager in die benachbarte Pumpstufe verhindert. Ein starker Austritt von Schmiermittel muss vermieden werden, um die vakuumtechnischen Leistungsanforderungen erreichen zu können.

Als Schmiermittel wird eines der im Stand der Technik bekannten Öle verwendet.

## Patentansprüche

1. Drehschiebervakuumpumpe (1) mit einer Welle (5), einem Schieber (11, 12), einem Radialgleitlager (7, 8), welches eine zur Welle koaxiale Zylinderfläche (33) umfasst, und einem Antrieb (14, 15), **dadurch gekennzeichnet, dass** die Zylinderfläche wenigstens eine Vertiefung (30, 30', 30") mit einer Mantelfläche (41, 41', 41 ") mit erhöhtem Abstand zur Wellenachse aufweist, und
dass ein Axiallager (6) für die Welle (5) vorgesehen ist, welches eine mit einer oder mehreren Axialvertiefungen (51) versehene Lagerfläche (50) umfasst.

2. Drehschiebervakuumpumpe (1) nach Anspruch 1, **dadurch gekennzeichnet, dass** die Zylinderfläche (33) an ihren axialen Enden Abschnitte (31, 32) mit in axialer Richtung und Umfangsrichtung konstantem Abstand zur Wellenachse aufweist.

3. Drehschiebervakuumpumpe (1) nach Anspruch 1 oder 2, **dadurch gekennzeichnet, dass** die Zylinderfläche (33) drei in Umfangsrichtung in gleichem Winkelabstand angeordnete Vertiefungen (30, 30', 30") aufweist.

4. Drehschiebervakuumpumpe (1) nach einem der vorhergehenden Ansprüche, **dadurch gekennzeichnet, dass** die Vertiefung (30, 30', 30") so auf der einer Schmiermittelpumpe (13) gegenüberliegenden Seite der Welle (5) angeordnet ist, dass sie in der von dieser erzeugten Kraftrichtung (25) liegt.

5. Drehschiebervakuumpumpe (1) nach einem der vorhergehenden Ansprüche, **dadurch gekennzeichnet, dass** die Mantelfläche (41, 41', 41 ") der Vertiefung (30, 30', 30") einen in Umfangsrichtung zunehmenden Abstand zur Wellenachse aufweist.

6. Drehschiebervakuumpumpe (1) nach einem der vorhergehenden Ansprüche, **dadurch gekennzeichnet, dass** die Vertiefung (30, 30', 30") eine Tasche (40, 40', 40") aufweist.

7. Drehschiebervakuumpumpe (1) nach einem der vorhergehenden Ansprüche, **dadurch gekennzeichnet, dass** die Welle (5) einstückig gestaltet ist und der Antrieb (14, 15) die Welle direkt antreibt.

## Claims

1. A rotary vane vacuum pump (1) having a shaft (5); a vane (11, 12); a radial plain bearing (7, 8) which comprises a cylindrical surface (33) coaxial to the shaft; and a drive (14, 15), **characterized in that** the cylindrical surface has at least one recess (30, 30', 30") with a jacket surface (41, 41', 41 ") having an increased spacing from the shaft axis; and
**in that** an axial bearing (6) is provided for the shaft (5) and comprises a bearing surface (50) provided with one or more axial recesses (51).

2. A rotary vane vacuum pump (1) in accordance with claim 1, **characterized in that** the cylindrical surface (33) has sections (31, 32) at its axial ends which have a constant spacing from the shaft axis in the axial direction and in the peripheral direction.

3. A rotary vane vacuum pump (1) in accordance with claim 1 or claim 2, **characterized in that** the cylindrical surface (33) has three recesses (30, 30', 30") which are arranged at the same angular spacing in the peripheral direction.

4. A rotary vane vacuum pump (1) in accordance with any one of the preceding claims, **characterized in that** the recess (30, 30', 30") is arranged at the side of the shaft (5) disposed opposite a lubricant pump (13) such that it lies in the direction of force (25) produced by said lubricant pump.

5. A rotary vane vacuum pump (1) in accordance with any one of the preceding claims, **characterized in that** the jacket surface (41, 41', 41 ") of the recess (30, 30', 30") has a spacing from the shaft axis which increases in the peripheral direction.

6. A rotary vane vacuum pump (1) in accordance with any one of the preceding claims, **characterized in that** the recess (30, 30', 30") has a pocket (40, 40', 40").

7. A rotary vane vacuum pump (1) in accordance with any one of the preceding claims, **characterized in that** the shaft (5) is designed in one piece; and the drive (14, 15) drives the shaft directly.

## Revendications

1. Pompe à vide (1) à tiroir rotatif, comportant un arbre (5), un tiroir (11, 12), un palier lisse radial (7, 8) qui comprend une surface cylindrique (33) coaxiale à l'arbre, et un entraînement (14, 15), **caractérisée en ce que** la surface cylindrique présente au moins un renfoncement (30, 30', 30") ayant une surface enveloppe (41, 41', 41") située à une distance accrue de l'axe d'arbre, et
**en ce qu'**il est prévu un palier axial (6) pour l'arbre (5), qui comprend une surface de palier (50) pourvue d'un ou de plusieurs renfoncements axiaux (51).

2. Pompe à vide (1) à tiroir rotatif selon la revendication 1, **caractérisée en ce que** la surface cylindrique (33) comprend à ses extrémités axiales des portions (31, 32) présentant une distance constante de l'axe d'arbre en direction axiale et en direction périphérique.

3. Pompe à vide (1) à tiroir rotatif selon la revendication 1 ou 2, **caractérisée en ce que** la surface cylindrique (33) comprend trois renfoncements (30, 30', 30") disposés à une distance angulaire identique en direction périphérique.

4. Pompe à vide (1) à tiroir rotatif selon l'une des revendications précédentes, **caractérisée en ce que** le renfoncement (30, 30', 30") est disposé sur un côté de l'arbre (5) opposé à une pompe à lubrifiant (13) de manière à se trouver dans la direction de la force (25) générée par celle-ci.

5. Pompe à vide (1) à tiroir rotatif selon l'une des revendications précédentes, **caractérisée en ce que** la surface enveloppe (41, 41', 41") du renfoncement (30, 30', 30") présente une distance de l'axe d'arbre, qui augmente en direction périphérique.

6. Pompe à vide (1) à tiroir rotatif selon l'une des revendications précédentes, **caractérisée en ce que** le renfoncement (30, 30', 30") présente une poche (40, 40', 40").

7. Pompe à vide (1) à tiroir rotatif selon l'une des revendications précédentes, **caractérisée en ce que** l'arbre (5) est réalisé d'un seul tenant et l'entraînement (14, 15) entraîne l'arbre directement.
